# EUROPÄISCHE PATENTSCHRIFT

(11) **EP 0 511 581 B1**
(45) Veröffentlichungstag und Bekanntmachung des Hinweises auf die Patenterteilung: **06.09.1995**
(21) Anmeldenummer: 92106864.9
(22) Anmeldetag: 22.04.1992
(51) Int. Cl.: F16D 55/227

(54) **Schwimmsattelbremse und Bolzen für eine solche**
Floating saddle brake and bolt for such one
Frein à étrier flottant et axe pour un tel frein

(30) Priorität: 30.04.1991 DE 9105358 U
(43) Veröffentlichungstag der Anmeldung: 04.11.1992
(73) Patentinhaber: LUCAS INDUSTRIES PUBLIC LIMITED COMPANY, Solihull, West Midlands B91 3TX (GB)
(72) Erfinder: Jachmann, Detlef, W-5400 Koblenz (DE); Sturm, Thomas, W-5411 Eitelborn (DE); Boldt, Harald, W-5434 Dernbach (DE)
(74) Vertreter: von Hellfeld, Axel, Dr. Dipl.-Phys.

(56) Entgegenhaltungen:
- DE-A- 2 619 984
- DE-A- 3 635 828
- DE-A- 3 721 718
- DE-B- 2 211 453

## Beschreibung

Die Erfindung betrifft eine Schwimmsattelbremse mit den Merkmalen des Oberbegriffs des Patentanspruchs 1.

Solche Bremsen sind aus der EP 0 395 460 B1 bekannt. Dort weist ein Bolzen, der einen Bremssattel an einer Verdrehung hindern soll, an seinem in eine Bohrung geführten Ende einen verdickten Abschnitt auf. Hierdurch soll eine Fehlausrichtung des Sattels in Bezug auf den Bremsträger beim Bremsen ermöglicht werden.

Die DE 26 19 984 A1 beschreibt eine Schwimmsattelbremse mit ebenfalls einer Bolzenführung in einer Bohrung, wobei die Führung eine Hülse aus Kunststoff aufweist, deren Innenfläche ballig ist. Diese Bremse ist aufwendig hinsichtlich der erforderlichen Teile und ihrer Montage sowie auch verschleißanfällig. Die dort gezeigte Lösung hat auch nichts zu tun mit dem Problem, das aufgrund von Herstellungstoleranzen Bohrungen in Metallteilen selten völlig parallel zueinander ausgerichtet werden können.

Insbesondere ist die Erfindung vorgesehen für Schwimmsattel-Teilbelag-Scheibenbremsen. Bei solchen Schwimmsattelbremsen wird der Sattel in der Regel beweglich in bezug auf einen fahrzeugfesten Bremsträger geführt. Die Führung erfolgt mittels zweier Bolzen, die in zugeordneten Bohrungen im Bremsträger axial verschiebbar sind. In der Regel sind die Bohrungen, in denen die Bolzen axial gleiten, mittels einer Manschette abgedichtet, damit Schmutz und Feuchtigkeit nicht in die Bohrung eintreten können und andererseits kein Schmiermittel aus der Bohrung austreten kann.

In der EP 0 046 432 A2 sind bei einer solchen Anordnung auftretende Probleme, um die es auch bei der vorliegenden Erfindung geht, beschrieben.

Bei der Herstellung sowohl der Bohrungen als auch der Bolzen sind gewisse Toleranzen unvermeidbar, d.h. die tatsächlichen Bolzen und Bohrungen weisen gegenüber den konstruktiven Vorgaben gewissen Abweichungen auf. Um solchen Maßabweichungen Rechnung zu tragen und zu verhindern, daß es zu Verkantungen oder anderen Beeinträchtigungen der Gleitführung kommt, wird im Stand der Technik eine der beiden Bolzen/Bohrung-Paarungen paßgenau (d.h. mit kleinstem Spiel) gefertigt, während die andere Bolzen/Bohrung-Paarung mit relativ größerem Spiel gefertigt wird, um insbesondere den sogenannten Winkelfehler unschädlich zu machen. Dieser Winkelfehler besteht darin, daß in Praxis die beiden Bohrungen selten völlig parallel sind, sondern vielmehr eine (wenn auch nur geringe) Abweichung von der idealen Parallelität aufweisen.

Die vorstehend genannte Lösung des Problems mit relativ großem Spiel des einen Bolzen/Bohrung-Paares (im Vergleich zum geringeren Spiel des anderen Bolzen/Bohrung-Paares) findet sich z.B in der eingangs bereits genannten EP 0 046 432 A2 und auch in der EP 0 395 460 A1.

Diese Lösungen haben allerdings den Nachteil, daß dann, wenn die Bohrungen keine oder nur sehr geringe Abweichungen von der idealen Parallelität aufweisen, es dazu kommen kann, daß der ein relativ größeres Spiel aufweisende Bolzen in seiner Bohrung Klappergeräusche verursacht, insbesondere bei Fahrt über unebene Wegstrecken.

In der DE 36 41 577 A1 ist zur Vermeidung eines Verkantens der Führungsbolzen in den zugeordneten Bohrungen vorgesehen, daß zwischen dem Bolzen und der ihn umgebenden Bohrung eine Führung angeordnet ist, die ein Verkippen des Bolzens ohnen Nachteile ermöglicht. Die Führung besteht aus zwei Teilen, nämlich einem inneren, konvexen Element und einer dieses Element umfassenden, konkaven Hülse. Diese Lösung ist sehr aufwendig und hinsichtlich ihrer Funktionszuverlässigkeit verbesserungsfähig.

Die DE 36 35 828 A1 schlägt zur Verbesserung der hier in Rede stehenden Führung für verschiebbar gelagerte Bremsgehäuse, wie insbesondere Schwimmsattel, vor, zumindest einen der Führungsbolzen mit einem nachgiebigen, biegbaren Abschnitt zwischen seinen Enden zu versehen, wodurch die Führung in der Lage sein soll, sowohl spielfrei Verschiebungen in Tangentialrichtung federnd aufzunehmen als auch Kräfte in Radialrichtung als starre Führung zu übertragen.

Der Erfindung liegt die Aufgabe zugrunde, eine Bremse der eingangs genannten Art mit einfachen Mitteln so zu gestalten, daß bei geringem Herstellungsaufwand eine sichere und geräuschfreie Führung gewährleistet ist.

Die erfindungsgemäße Lösung dieser Aufgabe ist mit ihren bevorzugten Ausgestaltungen in den Patentansprüchen gekennzeichnet.

Der in den Ansprüchen verwendete Begriff Schwimmsattelbremse soll jede Bremse erfassen, insbesondere Krartfahrzeugbremsen, mit einem über ein Führungssystem am Bremsträger axial verschiebbar gelagerten Bremsgehäuse.

Die erfindungsgemäße Lösung der vorstehend genannten Aufgabe sieht also vor, daß einer der zwei Führungsbolzen des Schwimmsattels zumindest in einem Teilbereich seiner axialen Erstreckung ballig tonnenförm ausgebildet ist.

Nachfolgend wird ein Ausführungsbeispiel dei Erfindung anhand der Zeichnung näher erläutert. Es zeigt:
- Fig. 1: eine Draufsicht auf eine Schwimmsattel-Teilbelag-Scheibenbremse mit zwei Bolzen/Bohrung-Paarungen;
- Fig. 2: einen erfindungsgemäßen Bolzen und
- Fig. 3: ein Detail D aus Fig.2 in vergrößertem Maßstab.

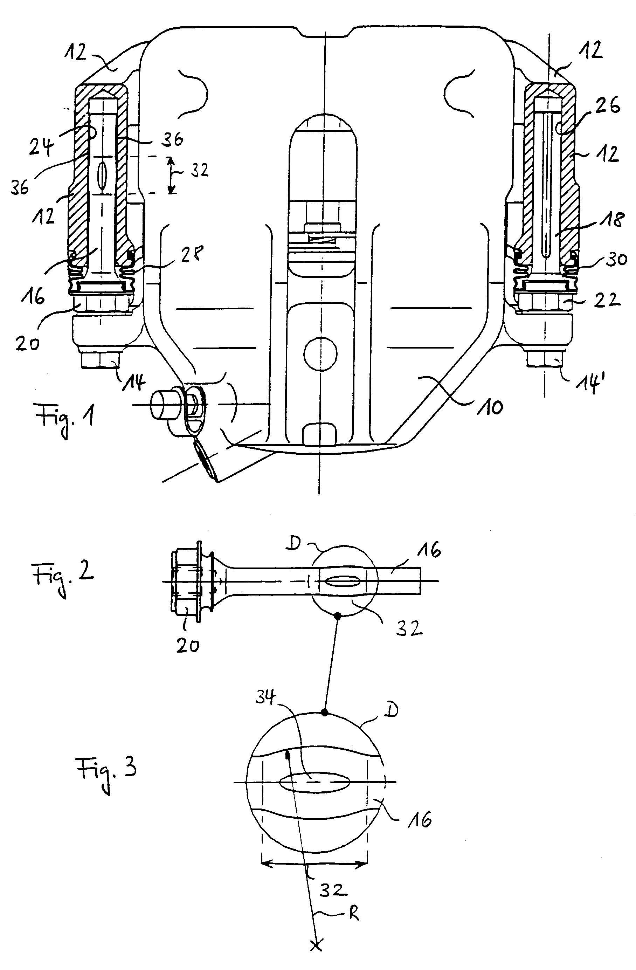

Fig.1 zeigt schematisch eine Schwimmsattel-Teilbelag-Scheibenbremse für ein Kraftfahrzeug mit einem Sattel 10, der in bezug auf einen fahrzeugfesten Bremsträger 12 gleitend verschiebbar abgestützt ist. Die Verschiebbarkeit wird erreicht durch zwei Bolzen 16, 18, die jeweils in Bohrungen 24 bzw. 26 axial gleitend beweglich sind. In Fig.1 ist also die Verschiebbarkeit des Sattels 10 gegenüber dem Bremsträger 12 in der Zeichenebene nach oben und unten gegeben, je nachdem, ob die Bremse angelegt wird oder ob die Bremsbacken von der Bremsscheibe entfernt werden.

Mittels Schraubenbolzen 14, 14' ist der Sattel 10 an den Bolzen 16, 18 befestigt. Hierzu sind die Schraubenbolzen 14, 14' in Innengewinde (nicht gezeigt) eingeschraubt, die in den Köpfen 20 bzw. 22 der Gleitbolzen 16, 18 ausgebildet sind.

Die in Fig.1 rechts gezeichnete Bohrung 26 ist in bezug auf den Durchmesser des Gleitbolzens 18 so paßgenau wie es die gegebenen Fertigungstoleranzen zulassen, d.h. sowohl die Bohrung 26 als auch der Bolzen 18 haben Kreiszylinderform, wobei das Spiel zwischen Bolzen 18 und Bohrung 26 so klein als möglich ist.

Demgegenüber weist der in Fig.1 links gezeichnete Bolzen 16 gegenüber der ihm zugeordneten Bohrung 24 ein gewisses Spiel auf, das in der Zeichnung mit dem Bezugszeichen 36 versehen und durch eine verdickt gezeichnete Grenzlinie zwischen Bolzen und Bohrung angedeutet ist. Manschetten 28, 30 dichten das Innere der Bohrungen 24, 26 ab, so daß Schmutz und Feuchtigkeit nicht eindringen können.

Der im Vergleich zur Bolzen/Bohrung-Paarung 18/26 ein größeres Spiel in bezug auf seine Bohrung 24 aufweisende Bolzen 16 weist in einem Abschnitt 32 eine ballig tonnenförmige Ausgestaltung auf. Der maximale Durchmesser dieses balligen Abschnittes 32 ist so bemessen, daß er bei der gegebenen Fertigungstoleranz so paßgenau wie möglich dem Innendurchmesser der Bohrung 24 entspricht und somit an der Stelle des maximalen Durchmessers des balligen Abschnittes 32 in bezug auf die Innenwand der Bohrung 24 praktisch kein Spiel gegeben ist. Dies ist in Fig.1 dadurch angedeutet, daß die das Spiel 36 andeutende, ansonsten verdickte Linie im Abschnitt 32 dünner gezeichnet ist.

Die Fig.2 und 3 zeigen die erfindungsgemäße Ausgestaltung des Bolzens 16 in weiteren Einzelheiten. Der ballige Abschnitt 32 erstreckt sich beim dargestellten Ausführungsbeispiel etwa über 25 % der Gesamtlänge des zylindrischen Abschnittes des Bolzens 16. Dabei ist der ballige Abschnitt 32 um zumindest seine eigene Länge von den beiden Enden des Bolzens 16 beabstandet. Der die Balligkeit definierende Radius liegt beim Ausführungsbeispiel gemäß den Fig.2 und 3 etwa zwischen 15 und 40 cm.

Gemäß Fig.3 weist der ballige Abschnitt 32 des Bolzens 16 über seinen Umfang verteilte Abflachungen 34 auf, damit insbesondere beim Einschieben des Bolzens 16 in die Bohrung 24 Luft austreten kann.

Das in den Fig. 1 bis 3 dargestellte Ausführungsbeispiel kann dahingehend abgewandelt werden, daß der Bolzen 16 über seine gesamte oder zumindest angenähert seine gesamte Längserstreckung in der Bohrung 24 tonnenförmig ballig ausgeformt ist. Der größte Durchmesser des Bolzens liegt dann etwa in der Mitte seiner Längserstreckung. Ist zum Beispiel die gesamte Länge des Bolzens (ohne den Kopf 20) etwa 5,5 cm, so wird für die Balligkeit ein Krümmungsradius R von ca. 50 - 500 mm vorgeschlagen, vorzugsweise 50 bis 160 mm, mit Abweichungen von ± 30 %.

Die vorstehend beschriebenen Ausführungsbeispiele der Erfindung haben gegenüber dem Stand der Technik den Vorteil, daß die dort noch vorhandene überbestimmte Vierpunktlagerung auf eine bestimmte Dreipunktlagerung reduziert ist. Klappergeräusche sind vermieden und es erfolgt ein wirksamer Winkelfehlerausgleich, so daß auch die Herstellungstoleranz weniger streng zu sein braucht. Hinsichtlich der Wartung und Reparatur ist die dargestellte Lösung insofern von Vorteil, als keine Verwechslungsgefahr hinsichtlich der Bolzen auftreten kann, weil der einen balligen Abschnitt aufweisende Bolzen bzw. der tonnenförmige Bolzen nur in eine der beiden Bohrungen paßt.

## Patentansprüche

1. Schwimmsattelbremse mit zumindest zwei Bolzen (16, 18), die zur Führung des Schwimmsattels (10) in Bohrungen (24, 26) axial verschiebbar sind, wobei einer (16) der Bolzen (16, 18) in einem Abschnitt (32) einen größeren Durchmesser als an anderen Abschnitten hat und der Durchmesser an den anderen Abschnitten kleiner ist als der Durchmesser der dem Bolzen zugeordneten Bohrung (24),
dadurch **gekennzeichnet,** daß
- beide Bohrungen (24, 26) in einem Bremsträger (12) angeordnet sind,
- der eine Bolzen (18) über seine ganze Länge paßgenau in der ihm zugeordneten Bohrung (26) unmittelbar aufgenommen ist, und
- bei dem anderen Bolzen (16) der Abschnitt (32) vergrößerten Durchmessers ballig tonnenförmig ist und paßgenau in der ihm zugeordneten Bohrung (24) unmittelbar gleitet, wobei der Krümmungsradius (R) des ballig tonnenförmigen Abschnitts (32) wesentlich größer ist als der halbe Durchmesser des Abschnitts (32).

2. Schwimmsattelbremse nach Anspruch 1,
dadurch **gekennzeichnet,** daß der Abschnitt (32) zumindest angenähert über die gesamte Längserstreckung des Bolzens (16) ballig tonnenförmig ausgebildet ist.

3. Schwimmsattelbremse nach Anspruch 1,
dadurch **gekennzeichnet,** daß der Abschnitt (32) etwa in der Mitte der Längserstreckung des Bolzens (16) liegt.

4. Schwimmsattelbremse nach Anspruch 1,
dadurch **gekennzeichnet,** daß der eine Bolzen (18) keinen ballig tonnenförmigen Abschnitt aufweist, zylindrisch ist und paßgenau in der ihm zugeordneten Bohrung (26) gleitet.

5. Verwendung eines Bolzens (16) in einer Schwimmsattelbremse nach Anspruch 1,
dadurch **gekennzeichnet,** daß zur gleitenden Führung des Sattels (10) in einer Bohrung (24) im Bremsträger (12) der Bolzen (16) einen ballig tonnenförmigen Abschnitt (32) aufweist, der Abstand zu den Enden des Bolzens (16) hat.

6. Verwendung eines Bolzens (16) in einer Schwimmsattelbremse nach Anspruch 1,
dadurch **gekennzeichnet,** daß zur gleitenden Führung des Sattels (10) in einer Bohrung (24) im Bremsträger (12) der Bolzen zumindest annähernd über seine gesamte Länge ballig tonnenförmig ist.

## Claims

1. A floating caliper brake, comprising at least two bolts (16, 18) which are axially displaceable in bores (24, 26) to guide the floating caliper (10), one (16) of the bolts (16, 18) having a greater diameter in one portion (32) than at other portions, and the diameter at the other portions being smaller than the diameter of the bore (24) associated with the bolt, **characterized** in that
- both bores (24, 26) are disposed in a brake carrier member (12),
- the one bolt (18) is received directly in its associated bore (26) with a precise fit throughout its entire length, and
- in the case of the other bolt (16), the portion (32) having the greater diameter is of crowned barrel shape and slides directly in its associated bore (24) with a precise fit, the radius of curvature (R) of the crowned barrel-shaped portion (32) being substantially greater than half the diameter of the portion (32).

2. The floating caliper brake as claimed in claim 1, characterized in that the portion (32) is of crowned barrel shape at least approximately throughout the full longitudinal extension of the bolt (16).

3. The floating caliper brake as claimed in claim 1, characterized in that the portion (32) lies approximately in the middle of the longitudinal extension of the bolt (16).

4. The floating caliper brake as claimed in claim 1, characterized in that the one bolt (18) has no crowned barrel-shaped portion, is cylindrical, and slides with a precise fit in its associated bore (26).

5. Use of a bolt (16) in a floating caliper brake as claimed in claim 1, characterized in that the bolt (16) has a crowned barrel-shaped portion (32), which is spaced from the ends of the bolt (16), for sliding guidance of the caliper (10) in a bore (24) in the brake carrier member (12).

6. Use of a bolt (16) in a floating caliper brake as claimed in claim 1, characterized in that the bolt is of crowned barrel shape at least approximately for its entire length so as to slidingly guide the caliper (10) in a bore (24) in the brake carrier member (12).

## Revendications

1. Frein à étrier flottant, comportant au moins deux axes (16, 18), que l'on peut faire coulisser axialement dans des alésages (24, 26) pour guider l'étrier flottant (10), l'un des axes (16, 18) présentant, sur une partie (32), un diamètre plus grand que sur d'autres parties, et le diamètre sur les autres parties étant plus petit que le diamètre de l'alésage (24) associé à l'axe,
caractérisé en ce que
- les deux alésages (24, 26) sont disposés dans un support de frein (12),
- l'un (18) des axes est introduit, en s'ajustant exactement, sur toute sa longueur, dans l'alésage (26) qui lui est associé, et
- en ce qui concerne l'autre axe (16), la partie (32) de diamètre agrandi est bombée en forme de tonneau, et glisse, en s'ajustant exactement, directement dans l'alésage (24) qui lui est associé, le rayon de courbure (R) de cette partie (32), de forme bombée, étant essentiellement plus grand que le demi-diamètre de cette partie (32).

2. Frein à étrier flottant suivant la revendication 1, caractérisé en ce que la partie (32) est réalisée bombée en forme de tonneau, au moins presque sur toute l'extension longitudinale de l'axe (16).

3. Frein à étrier flottant suivant la revendication 1, caractérisé en ce que la partie (32) est sensiblement située au milieu de l'extension longitudinale de l'axe (16).

4. Frein à étrier flottant suivant la revendication 1, caractérisé en ce que celui (18) des axes qui ne présente pas de partie bombée en forme de tonneau est cylindrique et glisse, en s'ajustant exactement, directement dans l'alésage (26) qui lui est associé.

5. Utilisation d'un axe (16) dans un frein à étrier flottant suivant la revendication 1, caractérisé en ce que, pour réaliser le guidage glissant de l'étrier (10) dans un alésage (24) situé dans le support de frein (12), l'axe (16) comporte une partie (32) bombée en forme de tonneau, présentant une certaine distance par rapport aux extrémités de l'axe (16).

6. Utilisation d'un axe (16) dans un frein à étrier flottant suivant la revendication 1, caractérisé en ce que, pour réaliser le guidage glissant de l'étrier (10) dans un alésage (24) situé dans le support de frein (12), l'axe (16), au moins presque sur toute sa longueur, est réalisé bombé en forme de tonneau.
